# FASCICULE DE BREVET EUROPEEN

(11) **EP 1 354 220 B1**
(45) Date de publication et mention de la délivrance du brevet: **15.06.2005**
(21) Numéro de dépôt: 02700410.0
(22) Date de dépôt: 25.01.2002
(51) Int. Cl.: G01S 17/10, G01S 17/93, G01S 17/87

(54) **PROCEDE ET DISPOSITIF DE DETECTION D'OBSTACLE ET DE MESURE DE DISTANCE PAR RAYONNEMENT INFRAROUGE**
VERFAHREN UND VORRICHTUNG ZUR HINDERNISERKENNUNG UND ABSTANDMESSUNG MITTELS INFRAROT
METHOD AND DEVICE FOR OBSTACLE DETECTION AND DISTANCE MEASUREMENT BY INFRARED RADIATION

(30) Priorité: 26.01.2001 FR 0101065
(43) Date de publication de la demande: 22.10.2003
(73) Titulaire: Wany SA, 34830 Clapiers (FR)
(72) Inventeur: LAVAREC, Erwan, F-34000 Montpellier (FR); TREMEL, Laurent Les Jardins Vert Parc, 34170 Castelnau le Lez (FR)
(74) Mandataire: Grynwald, Albert
(86) Numéro de dépôt international: PCT/FR2002/000304
(87) Numéro de publication internationale: WO 2002/059646

(56) Documents cités:
- DE-A- 4 102 152
- US-A- 4 313 655
- US-A- 4 851 661
- US-A- 5 138 150
- US-A- 5 819 008

## Description

La présente invention concerne un procédé de mesure de distance entre un premier objet et un deuxième objet. La présente invention concerne également un procédé de détection dudit deuxième objet qui peut être un obstacle susceptible de se trouver dans l'environnement dudit premier objet, dans une direction inconnue, ledit premier objet pouvant être notamment un robot. La présente invention concerne également un dispositif de détection d'obstacle et de mesure de distance entre un premier objet et un deuxième objet.

Plus particulièrement, la présente invention concerne un procédé de détection d'obstacles et de mesure de distance sans contact dans lequel on utilise un émetteur infrarouge et un récepteur infrarouge.

On connaît différents systèmes de mesures de distance sans contact que l'on peut différencier soit par le type de faisceau utilisé (laser, infrarouge ou ultrason) soit par la technologie du système de mesure (interférence, mesure du temps de vol, rupture de faisceau, triangularisation). Les principaux systèmes utilisés sont les suivants :
- Des télémètres à laser infrarouge comprennent une source qui émet un rayon infrarouge laser sur lequel on superpose le faisceau réfléchi. La somme des deux signaux génère des interférences qui dépendent de la longueur du trajet du faisceau. Ce type de mesure donne une mesure extrêmement précise en distance et cible parfaitement un point de mesure. Toutefois, ce système requiert une technologie complexe dont le coût est important. D'autre part, il nécessite un système optique pouvant être fragile.
- Des télémètres à ultrasons consistent à émettre un son dans la gamme ultrasonique et à mesurer le temps mis par ce son pour revenir vers l'émetteur. La vitesse du son étant faible dans l'air, il est aisé de mesurer précisément le temps de vol du signal. En effet, en présence d'un obstacle, le faisceau d'ultrasons émis se réfléchit, le temps mis par le détecteur pour capter l'écho de l'onde ultrasonore permet, en fonction du milieu de propagation, de déterminer la distance à laquelle celui-ci se situe. L'absorption des ultrasons dans l'air est importante, et d'autant plus importante que la distance parcourue est grande. C'est pourquoi cette technique est plus particulièrement utilisée dans les milieux aquatiques ou liquides beaucoup moins absorbant pour visualiser les fonds marins (sonar) ou encore en imagerie médicale (échographie). En outre, ce procédé à ultrasons est peu directif. En effet, il dépend fortement du support et peut être perturbé par des courants (air ou eau). D'autre part, il peut fournir des informations erronées sur des surfaces lisses car il y a réflexion totale de l'onde dans une seule direction (effet miroir). Ce type de capteur se trouve chez le fabricant MURATA® sous la référence MA40.
- On connaît aussi des procédés et dispositifs de détection et de mesure de distance à base de rayonnement infrarouge. Parmi les différentes techniques impliquant des rayonnements infrarouges, on distingue plusieurs types de méthodes :
   . un premier type repose sur le principe classique de la triangulation et est très largement utilisé dans les capteurs commerciaux,
   . un deuxième type est basé sur la mesure d'un décalage de phases entre signaux émis et signaux reçus, et
   . un dernier type concerne la mesure du temps de vol d'un rayonnement laser infrarouge, ce dernier système, bien que très précis, est très complexe et coûteux.

   Un système de mesure de distance utilisant la triangulation infrarouge est commercialisé notamment par la société LYNXMOTION sous le nom de IRPD® (Infrared Proximity Detector). Il est constitué principalement de deux diodes électroluminescentes émetteurs de rayons infrarouges et, d'un récepteur infrarouge (GP1U58Y) et d'un microcontrôleur qui permet l'alimentation successive des deux diodes électroluminescentes et qui surveillent la réflexion. La détection est asynchrone, les deux diodes fonctionnant en alternance. Les deux diodes électroluminescentes sont modulées par un oscillateur réglable. La sensibilité du capteur est contrôlée par la fréquence imposée à l'oscillateur : le récepteur contient en effet des filtres qui le rendent sensible à une onde infrarouge modulée à 38 KHz permettant ainsi de minimiser l'effet des perturbations dues au milieu ambiant, tel que l'éclairage naturel. L'inconvénient majeur de ce système réside dans sa faible portée. En effet, il ne peut détecter un obstacle que s'il est situé à une distance comprise entre 15 et 30 cm.
   D'autres systèmes dénommés DIRRS ® (Distance Infra-red Ranging System commercialisé par la société HVW Technologies) et IRODS ® (Infra-red Object Detection System aussi commercialisé par la société HVW Technologies) qui comptent parmi les plus performants, utilisent un principe de triangulation synchrone. Le système est rendu possible grâce à l'utilisation d'un récepteur PSD Position Sensitive Detector) et d'une lentille optique qui focalise le signal IR réfléchit. Le PSD est un système capable de modifier son niveau de signal de sortie suivant la position où les rayons le heurtent. La différence majeure entre ces deux dispositifs se situe uniquement au niveau de leur signal de sortie, l'un étant analogique (IRODS) et l'autre numérique (DIRRS). Ces détecteurs indiquent non seulement la présence ou l'absence d'un objet devant le capteur, mais peuvent également indiquer la distance à laquelle se situe l'obstacle potentiel : soit par une tension (IRODS), soit pas un nombre codé sur 8 bits (DIRRS). Il permettent des mesures fiables de distances comprises seulement entre 10 et 80 cm. Ces deux systèmes fonctionnent à l'aide de récepteurs SHARP GP2DO2 ® pour le DIRRS ® et SHARP GP2DO5 ® pour le détecteur IRODS ®.
- D'autres systèmes sont basés sur le déphasage des signaux. Ces dispositifs permettent une détection de proximité. Ils sont composés de plusieurs diodes émettrices électroluminescentes fixées au sommet de petits récepteurs infrarouges et disposés autour par exemple d'un robot. Lorsque l'une des diodes émettrices émet un rayonnement infrarouge qui est réfléchi par un éventuel objet situé en face, c'est l'intensité du rayonnement infrarouge réfléchi qui est détecté par le récepteur et qui est traduite par une tension analogique proportionnelle. On détermine la distance séparant l'objet du récepteur en mesurant le déphasage entre les signaux émis et reçus. Les récepteurs utilisés sont en général des détecteurs SHARP ® (GP1 U52X ou GPU58X) ® qui sont sensibles à des longueurs de fréquence d'ondes de l'ordre de 38 KHz.

Les principales différences entre les différents systèmes résident d'une part dans la disposition des diodes émettrices autour du robot, et d'autre part dans la prise en compte des interférences possibles entre les différents rayonnements émis. En effet, un récepteur peut détecter le rayon réfléchi provenant d'un autre émetteur que celui auquel il est associé. Les évaluations de la direction de l'objet de sa distance sont alors faussées.

Pour les dispositifs basés sur des méthodes prenant en compte le déphasage des signaux, les interférences gênent la mesure de distances, alors que dans la triangulation, elles contribuent au contraire à accroître la précision de la mesure.

Dans les dispositifs précédemment décrits, le circuit d'alimentation des diodes est conçu pour n'alimenter qu'un seul capteur à la fois, ou le capteur (ensemble émetteur / récepteur) est monté sur un moteur qui effectue des rotations autour d'un axe pour ainsi sonder une multitude de directions.

DE 41 02 152 divulgue un dispositif optoélectronique de mesure. La puissance émise est reglée pour maintenir le signal reçu à un seuil de détection.

Un but de la présente invention est de fournir un système de mesure de distance ou de détection d'objet qui puisse être embarqué facilement sur un petit robot domestique et qui soit donc suffisamment léger et de faible encombrement pour être porté par des robots de petites dimensions sans affecter leur mobilité.

Un autre but est de fournir un système de détection et de mesure de distance le plus économique possible à performance optimum, et en particulier de fournir un système dont le champs de détection peut être notamment de l'ordre de 0 à plus de 10 m avec une résolution de l'ordre du centimètre.

Un autre but est de réaliser un dispositif de détection et de mesure dont les sorties soient en numérique et puissent être branchées sur un port parallèle et commandées à partir d'un processeur de commande d'un robot.

Selon un premier aspect, l'invention concerne un procédé de détection et de mesure de distance entre un premier objet et un deuxième objet ; ledit procédé étant tel qu'il comprend les étapes suivantes:
a) l'étape d'émettre un rayonnement infrarouge à partir d'un émetteur fixé sur ledit premier objet et alimenté par un signal électrique d'émission, et
b) l'étape de détecter le retour dudit rayonnement infra rouge sur un récepteur, après que ledit rayonnement infrarouge ait été réfléchi par ledit deuxième objet ;
ledit récepteur étant fixé sur ledit premier objet à proximité dudit émetteur et produisant un signal électrique de réception ;
ledit procédé étant caractérisé en ce qu'il comprend en outre les étapes suivantes :
- l'étape de faire varier graduellement la puissance du rayonnement infrarouge émis par ledit émetteur, en contrôlant ledit signal électrique d'émission, jusqu'à ce que la puissance du rayonnement infrarouge émis atteigne une puissance de détection (PS) telle que, pour cette puissance de détection (PS), le rayonnement infrarouge soit détecté par ledit récepteur après réflexion par ledit deuxième objet,
- l'étape de calculer la distance (D) entre ledit premier objet et ledit deuxième objet à partir de la valeur de ladite puissance de détection (PS), en établissant une corrélation, notamment par étalonnage, entre ladite distance (D) et ladite puissance de détection.

L'usage de ce procédé se fait en général dans l'air pour détecter des objets en matériau solide. Mais, il convient aussi à tout espace perméable aux infrarouges. Le principe physique utilisé consiste donc à émettre un signal infrarouge modulé en puissance et de mesurer l'énergie reçue par réflexion. L'énergie reçue décroissant avec la distance parcourue, on augmente la puissance de l'onde émise par la source jusqu'à obtenir un écho détectable par le récepteur. Une originalité de ce principe consiste donc à tirer partie du fait que si la puissance de l'onde émise (qui est généralement liée à l'amplitude d'un signal de commande de l'émetteur) est insuffisante compte tenu de la distance à parcourir jusqu'à l'obstacle, l'onde réfléchie n'est pas détectée par le récepteur ; la distance est donc mesurée en détectant le retour du signal écho émis par un obstacle et en faisant émettre par l'émetteur des rayonnements dont la puissance croît graduellement jusqu'à ce que le récepteur détecte un signal. Si le système n'a toujours rien détecté lorsqu'il a atteint la pleine puissance émettrice, cela signifie qu'il n'y a pas d'obstacle dans la direction explorée à une distance donnée considérée comme significative. En revanche, si le récepteur reçoit et détecte un écho, de préférence on vérifie que cet écho est bien celui du signal émis.

On entend ici par "récepteur" un dispositif qui émet un signal électrique lorsqu'il reçoit un rayonnement infrarouge d'intensité suffisante. En général, ces récepteurs infrarouges sont constitués de phototransistors ou de photodiodes et fonctionnent sur le principe d'une conversion d'un rayonnement infra-rouge en tension électrique.

De préférence, dans un procédé selon l'invention :
a) on émet un rayonnement infrarouge d'une longueur d'onde spécifique, de préférence entre 850nm et 950nm, à l'aide d'un émetteur comportant (et/ou constitué par) une diode électroluminescente, et
b) on utilise un récepteur comportant (et/ou constitué par) un phototransistor ou photodiode qui détecte spécifiquement ladite longueur d'onde.

De préférence, afin de distinguer la source d'émission d'autres sources qui émettent sur la même longueur d'onde, on utilise un récepteur qui détecte spécifiquement une onde infrarouge émise selon un mode pulsé à une fréquence de pulsation donnée spécifique (encore appelée « fréquence porteuse »), et on génère ledit mode de pulsation de l'onde infrarouge émise à partir d'une alimentation électrique discontinue dudit émetteur selon un signal électrique en créneau ou en « signal carré ».

En effet, classiquement, on trouve dans le commerce des récepteurs spécifiques d'une onde émise sous un mode pulsé à une fréquence de pulsation donnée, lesdits récepteurs étant caractérisés par leur double spécificité vis à vis de la longueur d'onde de l'onde infrarouge, et vis à vis de la fréquence porteuse du courant électrique d'alimentation, laquelle fréquence porteuse est classiquement de 30 à 60 kHz, notamment de 38 kHz. On évite en effet d'utiliser un récepteur spécifique de la fréquence du réseau électrique qui est de 50 ou 60 Hz.

Pour générer l'alimentation électrique dudit émetteur selon un signal en créneau ou signal carré, ledit émetteur est généralement couplé à un transistor.

Plus précisément, selon un mode de réalisation avantageux, on réalise les étapes dans lesquelles :
a) on émet ledit rayonnement infrarouge selon un mode présentant une fréquence de pulsation donnée, et
b) l'onde réfléchie reçue par ledit récepteur n'est détectée que si elle présente la même fréquence de pulsation.

L'alimentation de la diode émettrice en mode impulsionnel permet d'augmenter considérablement sa portée. En effet, dans la mesure où l'onde est émise pendant un temps réduit, la puissance de l'onde émise peut s'en trouver augmentée, En effet, les diodes infrarouges ne peuvent émettre fortement que pendant de courts instants et supportent de bref sur-régimes. Ainsi on peut détecter des objets à grande distance du capteur.

Par ailleurs, cette émission des ondes infrarouges selon un mode impulsionnel permet de ne pas saturer l'espace environnant de rayonnements infrarouges, en permettant ainsi à d'autre systèmes de faire des mesures sans interférer entre eux.

Pour augmenter encore la spécificité du dispositif, notamment dans le cas où d'autres dispositifs du même type fonctionneraient à proximité avec des émetteurs émettant des ondes sur la même fréquence porteuse, on introduit une signature (ou codage) numérique dans le signal électrique d'alimentation dudit émetteur, de sorte que le rayonnement infrarouge émis par un émetteur comporte une signature caractéristique de celui-ci. Cette signature numérique sur un nombre de bits donnés, notamment au moins 4 bits, peut se superposer (et/ou être associée) à ladite fréquence de pulsation.

Si le récepteur reçoit un signal de même signature que le signal émis, cela signifie qu'un obstacle est détecté. La distance capteur / obstacle se déduit alors de la puissance de l'émission et éventuellement de la sensibilité qu'il a fallu développer pour détecter le signal. Si la signature du signal détecté est différente, alors le signal reçu provient d'une autre source et on considère qu'aucun obstacle n'est détecté.

Ainsi, dans un mode de réalisation avantageux du procédé selon l'invention,
- ledit émetteur et ledit récepteur comprennent ou sont couplés à des transistors, de sorte qu'un signal électrique logique "0" ou "1" est fourni selon qu'une onde est émise ou non par l'émetteur et respectivement selon qu'une onde est détectée ou non par ledit récepteur,
- ledit mode de pulsation de l'onde infrarouge puisée émise est généré par une alimentation électrique dudit émetteur selon un signal électrique en créneau, notamment à une dite fréquence de pulsation ou fréquence porteuse de 38kHz, ledit signal électrique fourni audit émetteur comprenant ladite signature numérique, et
- on vérifie si le signal électrique fourni par ledit récepteur comporte la même signature numérique que le signal électrique d'alimentation dudit émetteur, en comparant les signaux électriques envoyés à l'émetteur et ceux fournis sensiblement simultanément par ledit récepteur.

Ainsi, un circuit électronique connecté au(x) émetteur(s) et récepteur(s) engendre l'émission d'un signal infrarouge qu'il cherche à détecter au même instant. Les distances maximum que l'on cherche à mesurer étant de l'ordre de 10 m, un autre point innovant et avantageux de la méthode de la présente invention réside dans l'hypothèse selon laquelle dans de telles distances, le temps de vol de l'onde infrarouge est négligeable (temps de l'onde aller et retour sur 10m étant de 66 ns).

Dans un mode de réalisation du procédé selon la présente invention,
a) on émet des rayonnements de puissances variables comprenant 2ⁿ valeurs différentes de puissance de rayonnement à partir de n résistances de valeurs différentes commandées par des transistors à effet de champ, permettant de fournir à l'émetteur un courant d'intensité croissante comprenant 2ⁿ valeurs différentes croissantes, que l'on ajuste par les commandes logiques de ces transistors, de sorte que la variation progressive de la puissance émise résulte de la commande des transistors par un signal numérique codé sur n bits correspondant aux n commandes logiques des n transistors, et
b) on détermine la distance D entre le premier objet et le deuxième objet parmi 2" valeurs de distances préalablement déterminées par étalonnage, en fonction du signal numérique (et enregistrées dans une mémoire du système effectuant la mesure) correspondant à ladite puissance de détection.

Plus particulièrement, on utilise une diode émettrice capable d'émettre une puissance de rayonnement maximal donnée P1 et une diode réceptrice capable de détecter une puissance de rayonnement minimal donnée P2, les valeurs de P1 et P2 étant telles qu'on puisse mesurer des distances comprises entre 0,5 m et 5 m, et de préférence encore entre 0,1 m et 10 m, avec notamment P1 variant de 250 à 500 mw/Sr et P2 variant de 0,1 à 10 mw/Sr (*milliwatt par stéradian*).

Plus particulièrement, on peut utiliser les émetteurs et récepteurs suivants :
- Emetteurs :

| Référence | Fabricant | Puissance* (mW/Sr) |
|---|---|---|
| LD274 | Siemens | 350 |
| SFH4391 | Siemens | 280 |
| SFH4500 | Siemens | 500 |

| | | |
|---|---|---|
| * Emission de 100µs avec un courant de 1A | | |

- Récepteurs :

| Référence | Fabricant | Sensibilité (mW/Sr) |
|---|---|---|
| TSOP1838 | Temic | 0.3 |
| SFH5110 | Infineon | 0.35 |

De préférence, on émet un nombre d'impulsions de puissance croissante, et le cas échéant on utilise un nombre n de résistances de valeurs différentes Ri avec i = 1 à n, tel que la précision de mesure, consistant en l'écart entre lesdites 2ⁿ distances possibles consécutives, soit d'une précision d'au moins 10 cm, de préférence d'au moins 1 cm.

Le nombre n desdites résistances Ri détermine la sensibilité de la mesure à l'obstacle.

Selon un mode de réalisation du procédé destiné à déterminer la position d'un ou plusieurs deuxièmes objets par rapport à un référentiel lié audit premier objet ; le procédé comprend en outre l'étape suivante :
- l'étape d'émettre, à partir dudit premier objet, des rayonnements infrarouges dans plusieurs directions réparties de manière appropriée autour dudit premier objet, de préférence dans au moins quatre directions, de préférence encore dans au moins huit directions ;
lesdits rayonnements infrarouges, associés à chaque direction, étant émis dans des cônes dont l'angle au sommet est compris entre 5 et 90°,
de sorte que lesdits deuxièmes objets situés dans l'environnement dudit premier objet sont détectés et que leurs positions par rapport à un référentiel lié au premier objet peuvent être calculées.

La présente invention a également pour objet un dispositif de détection et de mesure de distance entre un premier objet et un deuxième objet ; ledit dispositif comprenant en outre :
- un émetteur de rayonnement infrarouge fixe sur ledit premier objet et alimenté par un signal électrique d'émission,
- un récepteur détectant le retour dudit rayonnement infrarouge, après que ledit rayonnement infrarouge ait été réfléchi par ledit deuxième objet ;
ledit récepteur étant fixé sur ledit premier objet à proximité dudit émetteur et produisant un signal électrique de réception ;
ledit dispositif comprenant :
- des moyens de contrôle dudit signal électrique permettant de faire varier graduellement la puissance du rayonnement infrarouge émis par ledit émetteur, en contrôlant ledit signal électrique d'émission, jusqu'à ce que la puissance du rayonnement infrarouge émis atteigne une puissance de détection (PS) telle que, pour cette puissance de détection (PS), le rayonnement infrarouge est détecté par ledit récepteur après réflexion par ledit deuxième objet,
- des moyens de calcul de la distance (D) entre ledit premier objet et ledit deuxième objet à partir de la valeur de ladite puissance de détection (PS), en utilisant des corrélations, préalablement établies notamment par étalonnage, entre ladite distance (D) et ladite puissance de détection (PS).

Plus particulièrement, un dispositif selon l'invention comprend:
- un émetteur comportant une diode électroluminescente qui émet spécifiquement à une longueur d'onde infrarouge donnée,
- un récepteur comportant un phototransistor qui détecte spécifiquement ladite longueur d'onde infrarouge donnée et, de préférence spécifiquement une onde pulsée à une dite fréquence de pulsation donnée.

Selon des modes préférentiels de réalisation du dispositif :
- lesdits moyens de contrôle dudit signal électrique permettant de faire varier graduellement la puissance du rayonnement infrarouge émis par ledit émetteur, comprennent un premier processeur contrôlant ledit signal électrique d'émission de telle sorte que ledit rayonnement infrarouge soit émis selon un mode spécifique comportant une signature ;
- ledit premier processeur est programmé de telle sorte que le mode spécifique d'émission dudit émetteur soit un mode d'émission pulsé présentant une fréquence de pulsation donnée caractérisant ladite signature ;
- ledit premier processeur contrôlant ledit signal électrique d'émission est programmé de telle sorte que le mode spécifique d'émission dudit émetteur soit un mode d'émission pulsé comportant une signature numérique ;
- ledit premier processeur est programmé de telle sorte que ledit signal électrique d'émission soit un signal en créneau et que ladite signature numérique dudit rayonnement infrarouge se présente sous la forme d'un signal logique composé de ("1") ou de ("0") selon que l'émetteur est alimenté ou non par ledit signal en créneau ;
- pour déterminer si un rayonnement infrarouge réfléchi, reçu par un récepteur d'un objet déterminé, a pour origine un émetteur situé sur ledit objet déterminé, ledit premier processeur comporte des moyens de vérification de ladite signature, de sorte qu'il est possible de discriminer entre le rayonnement infrarouge réfléchi provenant de l'émetteur dudit objet déterminé et les rayonnements infrarouges provenant, directement ou indirectement, d'autres objets ;
- lesdits moyens de vérification de ladite signature comportent des moyens de comparaison du signal électrique d'alimentation de l'émetteur dudit objet déterminé au signal électrique fourni par le récepteur du même dit objet déterminé.
- ledit premier processeur, notamment un microcontrôleur, et un deuxième processeur ou processeur externe sont reliés entre eux, audit émetteur et audit récepteur de sorte que :
   * ledit premier processeur contrôle par un signal numérique sur n bits, via des transistors à effet de champ, n résistances de valeurs différentes montées sur le circuit d'alimentation électrique dudit émetteur, de sorte que la puissance de rayonnement infrarouge émise par ledit émetteur, notamment par une diode électroluminescente, peut prendre 2ⁿ valeurs croissantes,
   * ledit premier processeur, relié au récepteur, vérifie que le signal électrique fourni par le récepteur comporte la même signature, notamment ladite signature numérique,
   * ledit premier processeur transmet à un deuxième processeur un signal formé sur n bits indiquant parmi les 2ⁿ valeurs possibles de ladite puissance de détection (PS) celle qui a été constatée,
   * ledit deuxième processeur calcule la distance entre le premier objet et le second objet par corrélation à partir d'un étalonnage des 2ⁿ valeurs de distance possible par rapport aux 2ⁿ valeurs de puissance de détection.

Le procédé et dispositif selon la présente invention peuvent être utilisés dans toute utilisation nécessitant une mesure de distance telle que :
- mesure de distance entre voitures pour sécuriser la conduite,
- mesure d'un niveau de remplissage d'un récipient,
- comptage d'objets sur une chaîne de production,

La présente invention a également pour objet un procédé et dispositif de détection d'un deuxième objet susceptible de se trouver dans l'environnement d'un premier objet dans une direction inconnue, caractérisé en ce qu'on réalise plusieurs mesures à partir de plusieurs capteurs, chaque capteur comprenant un ensemble émetteur-récepteur, l'émetteur et le récepteur étant fixes l'un par rapport à l'autre, par un procédé de mesure de distances selon l'invention tel que défini ci-dessus, lesdits émetteurs étant disposés de manière à émettre desdits rayonnements dans plusieurs directions, de préférence au moins quatre directions, de préférence encore au moins huit, dans l'espace autour dudit premier objet et lesdits émetteurs émettant des rayonnement dans une direction de l'espace définissant un cône dont le sommet coïncide avec ledit émetteur et dont l'angle au sommet est compris entre 5 et 90°, de sorte que lesdits deuxièmes objets situés dans l'environnement dudit premier objet sont détectés et que leurs positions par rapport à un référentiel lié au premier objet peuvent être calculées.

La présente invention a également pour objet un dispositif de détection d'obstacle et de mesure de distance comprenant plusieurs ensembles émetteur-récepteur fixés sur ledit premier objet et disposés comme définis ci-dessus, lesdits ensembles émetteur-récepteur étant reliés à undit premier processeur et undit deuxième processeur.

Selon un autre aspect, l'invention procure un robot mobile détectant et évitant des obstacles ; ledit robot mobile comportant des moyens de déplacement contrôlés par un organe de commande comprenant un dispositif de détection et de calcul de distance tel que défini ci-avant, de sorte que :
. si un ou plusieurs obstacles se trouvent dans l'environnement, dudit robot mobile,
. si ledit robot mobile se déplace dans une direction coïncidant avec celle dans laquelle se trouve ledit obstacle,
. si la distance mesurée entre ledit robot mobile et ledit obstacle est inférieure à une valeur déterminée, notamment en fonction de la vitesse de déplacement dudit robot mobile,
ledit dispositif programme un changement de trajectoire, en tenant compte des autres obstacles situés dans l'environnement.

La présente invention a également pour objet un procédé de détection et d'évitement d'un obstacle par un mobile, notamment un robot, caractérisé en ce qu'il comprend un procédé de mesure selon l'invention telle que définie ci-dessus, dans lequel :
. ledit mobile correspond audit premier objet,
. ledit obstacle correspond audit deuxième objet, et
. on commande une modification de la trajectoire dudit mobile, notamment un robot, si la distance mesurée est inférieure à une valeur donnée, notamment une valeur au-dessous de laquelle ledit obstacle ne peut pas être évité compte tenu de la vitesse de déplacement dudit mobile.

La présente invention a également pour objet un mobile, notamment un robot équipé d'un dispositif de détection d'obstacle et de mesure de distance selon l'invention.

D'autres caractéristiques et avantages de la présente invention apparaîtront à la lumière des exemples détaillés de réalisation qui suivent.

La figure 1 est une vue schématique d'un robot mobile conforme à l'invention, équipé de huit capteurs infrarouges de détection d'obstacle.

La figure 2 est une portion de chronogramme illustrant schématiquement l'augmentation selon huit paliers « hachés » de l'intensité délivrée à une diode émettrice conformément à l'invention ; ce chronogramme peut correspondre à une période de la variation périodique de cette intensité (dans le cas d'un signal de commande codé sur 3 bits), ou bien à une portion de cette période (par exemple une demi-période).

La figure 3 est un schéma détaillant la structure d'un circuit électronique (repère 3, figure 1) de contrôle, commande et traitement des signaux échangés avec les émetteurs - récepteurs infrarouges.

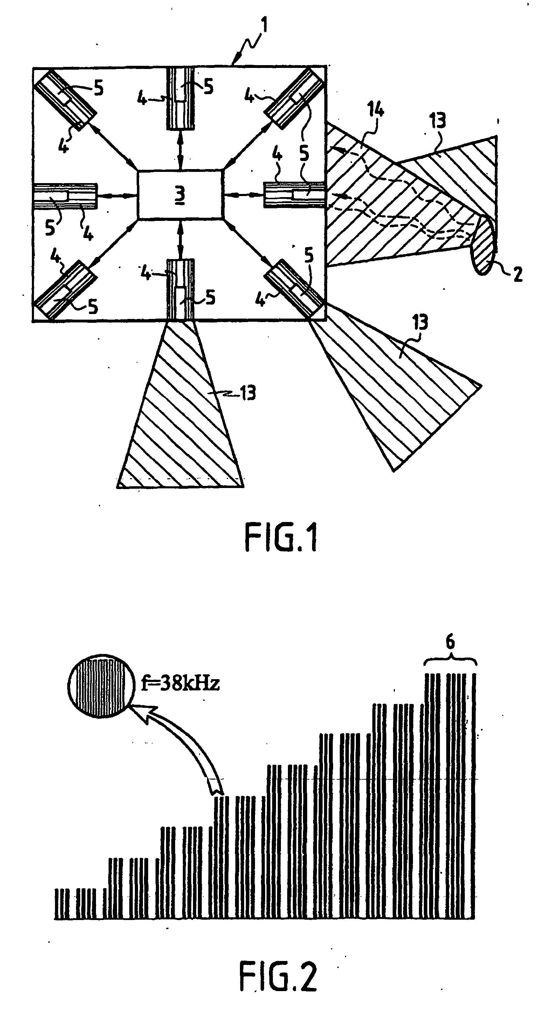

La figure 1 représente un schéma de l'installation avec huit capteurs sur un mobile tel qu'un robot 1 répartis dans huit directions de l'espace montrant les cônes 13 des rayonnements émis et le retour des rayons réfléchis 14 sur des obstacles 2 vers le récepteur 5.

La figure 2 représente 8 (sur 16) niveaux d'intensité de courant dans la diode émettrice, et donc 8 (sur 16) niveaux de puissance de l'onde émise par une diode émettrice, correspondant à une signature numérique sur 10 bits valant "1110111101". l'onde étant émise en mode impulsionnel à 38 kHz.

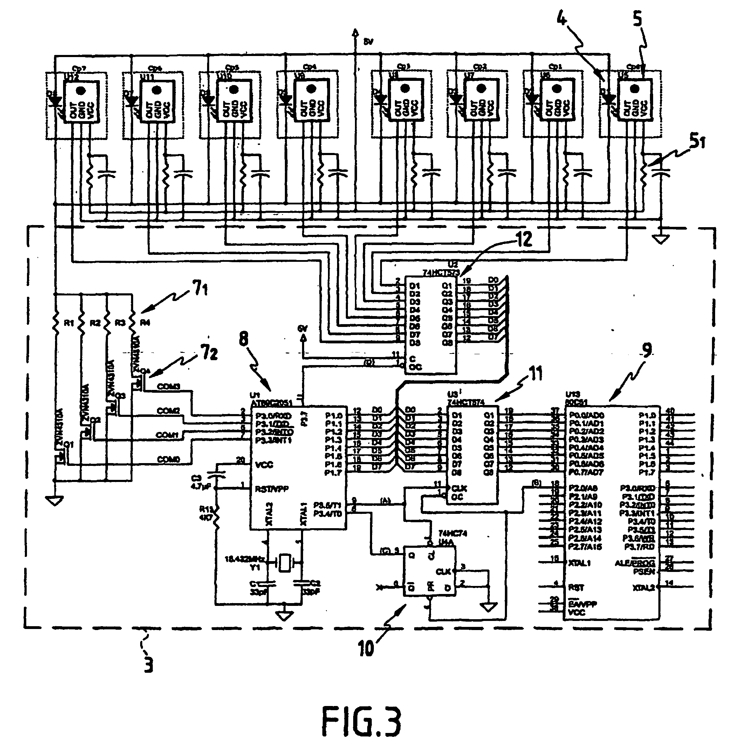

La figure 3 représente un schéma de montage électronique représentant les huit diodes émettrices 4 (D1 à D8) connectées à un microcontrôleur 8, les huit récepteurs 5 (U5 à U12) et un processeur externe 9 (U13). La communication entre les processeurs 8 et 9 se fait par l'intermédiaire d'un registre de type bascule 11 (U3) à sortie collecteur ouvert.

On a réalisé un système de mesure de distances comprenant huit capteurs (Cp₀ à Cp₇) consistant donc dans un ensemble de 8 émetteurs 4 - récepteurs 5, chacun des capteurs étant fixé sur un robot 1. Chaque récepteur 5 est fixé au-dessus de l'émetteur 4 correspondant. Les émetteurs 4 sont disposés de manière à émettre des rayonnements infrarouges dans 8 directions régulièrement réparties dans l'espace autour dudit premier objet ; chacun des émetteurs émet un rayonnement dans une direction d'espace définissant un cône 13 dont le sommet coïncide avec ledit émetteur et dont l'angle au sommet est de 20°.

Ce système est utile pour la détection et l'évitement d'obstacles par le robot 1 formant ledit premier objet. En fonction de la détection et de la mesure de la distance avec un obstacle, on commande en général une modification de la trajectoire du robot si la distance mesurée est inférieure à une valeur donnée.

Chaque émetteur 4 (D1 à D8) est constitué par une diode électroluminescente à rayonnement infrarouge, de référence commerciale SIEMENS ® LD274 ; chaque récepteur 5 (U5 à U12) est un phototransistor de référence commerciale TEMIC ® TSOP 1838 ® à fort gain. Les caractéristiques de la diode émettrice LD274 sont : angle d'émission θ = 20°, courant I = 100 mA, longueur d'onde λ = 950nm, irradiance W=350mW/Sr. Les caractéristiques du récepteur TSOP1838 sont : angle de réception θ = 90°, longueur d'onde λ = 950nm, irradiance W=0.3mW/Sr, fréquence de porteuse f=38kHz.

Dans chacune des diodes émettrices, on envoie simultanément le même courant électrique produisant le même rayonnement infrarouge.

Un microcontrôleur 8 (U1) et un processeur externe 9 (U13) sont reliés entre eux via le registre (U3) 11. L'interface entre le microcontrôleur 8 et le processeur externe (9) est synchronisé par un registre 10 (U4). Enfin, le microcontrôleur 8 pilote directement les huit émetteurs 4 et analyse les informations délivrées par les huit récepteurs 5 via le registre (U12).

Les références des composants utilisés sont les suivantes :

| Référence | Désignation | Fonction | Fabricant |
|---|---|---|---|
| U1 | AT89C2051 | Microcontrôleur | Atmel® |
| U2 | 74HCT573 | Registre CO* | Philips® |
| U3 | 74HCT574 | Registre CO* | Philips® |
| U4 | 74HCT74 | Bascule R/S | Philips® |
| U13 | 80C51 | Processeur | Philips® |
| Q1 à Q4 | ZVN4310A | Transistor | Zetex® |
| U5 à U12 | TSOP1838 | Détecteur IR | Temec® |
| D1 à D8 | LD274 | Diode IR | Siemens® |

| | | | |
|---|---|---|---|
| * Collecteur ouvert | | | |

La commande d'émission des diodes infrarouges est effectuée selon un mode impulsionnel par le microcontrôleur 8 qui fournit un signal carré ou créneau, à une fréquence porteuse de 38 kHz qui est modulé en amplitude afin, d'une part de définir la signature numérique associée à chaque émetteur, et d'autre part de contrôler le niveau d'émission des diodes ; le niveau d'émission des diodes correspondant à la hauteur des paliers (figure 2), varie selon l'état des transistors Q1 à Q4 ; pour chaque palier, le signal d'alimentation des diodes comporte une signature numérique formatée ici sur 10 bits valant « 1110111101 » comme schématiquement représenté sur la figure 2 : à chaque bit de valeur « 1 » correspond un train de neuf impulsions de la fréquence porteuse, dont la longueur totale est dans cet exemple égale à 237 microsecondes environ; à chaque bit de valeur « 0 » correspond une coupure de l'alimentation de la diode pendant la même durée.

La représentation schématique de la signature numérique sur la figure 2 montre que si l'on divise chaque palier en dix unités de temps, on interrompt l'alimentation électrique (pulsée à une fréquence de 38kHz) à la quatrième et à la neuvième unité de temps.

La vérification de la signature numérique 6 est réalisée par le microcontrôleur 8 qui compare les signaux électriques envoyés à l'émetteur 4 et ceux fournis sensiblement simultanément par le récepteur correspondant 5, par l'intermédiaire du registre 12.

Chaque récepteur 5 comprend un transistor (non représenté) et fournit un signal logique 1 ou 0 selon qu'une onde pulsée à ladite fréquence porteuse est détectée ou non par ledit récepteur 5, c'est à dire selon qu'une onde est ou non émise dudit émetteur puis réfléchie par undit obstacle.

Chaque émetteur 4 est couplé à un transistor 7₂, comme explicité ci-après et se commande par un signal logique 1 ou 0, de sorte qu'un rayonnement infrarouge pulsé selon qu'une onde pulsée à ladite fréquence porteuse est émis ou non.

Le montage 7_{1,}7₂ comportant quatre branches en parallèle et inséré dans l'alimentation commune aux huit diodes émettrices, permet de générer 16 niveaux (ou paliers) d'intensité de courant dans les huit diodes émettrices 4 (D1 à D8) ; chaque branche comporte une résistance (R1 à R4) connectée en série avec un transistor FET (Q1 à Q4).

Avec un tel montage, on provoque l'émission par chaque diode d'un rayonnement de puissance variable comprenant seize (2⁴) valeurs différentes (ou paliers) de puissance de rayonnement à partir de quatre résistances 7₁ de valeurs différentes (R1 et R4) commandées par les transistors 7₂ (Q1 à Q4), qui permettent de fournir un courant en intensité croissante comprenant seize valeurs différentes croissantes en fonction des commandes logiques desdits transistors (COM 0 à COM 3). Chacune desdites valeurs de puissance émise correspond à un signal numérique sur 4 bits, correspondant aux quatre commandes logiques des quatre dites résistances. Un étalonnage préalable entre la distance correspondante et chacune des seize puissances de détection possibles a été réalisé, de sorte que le processeur externe 9 peut déterminer la distance D entre le robot et un obstacle éventuel, parmi les seize valeurs de distances possibles de commande des transistors Q1 à Q4 (qui est délivré cycliquement par le processeur 8 et transmis au processeur 9), en fonction du signal numérique correspondant à ladite puissance de détection. Ainsi, en fonction des commandes logiques (0 ou 5 volt) des 4 commandes COM 0 à COM 3 de R1 à R4, on fixe un courant plus ou moins important dans les diodes émettrices infrarouges D1 à D8 et de ce fait, on génère, simultanément et par chaque diode, un faisceau infrarouge de puissance croissante présentant un chronogramme similaire à celui représenté sur la figure 2.

Les commandes des quatre résistances 7₁ se fait par les transistors 7₂ dont la polarisation se fait directement en 5 volts. On dispose ici de 4 commandes, soit une investigation sur 16 zones ou marches de valeurs de puissance. Les résistances sont choisies à des valeurs différentes et par multiples de 2. Ainsi, le courant dans une résistance est le double de la suivante. Le courant commun aux diodes émettrices est tel que représenté sur la figure 2, avec une signature codée par exemple sur 10 bits (ici 1110111101).

La détection du signal infrarouge de retour se fait avec un récepteur 5, comprenant un composant intégré fournissant en sortie un signal logique de 0 ou 5 volts lorsqu'il reçoit ou non un rayonnement IR de 950 nm pulsé à une fréquence de 38KHz. Pour ces récepteurs on doit filtrer l'alimentation du récepteur avec des filtres 5₁ (comprenant un condensateur de capacité 10µF et une résistance de 330 Ω), car de faibles variations de son alimentation peuvent induire de fausses détections.

Après étalonnage dans lequel on a établi une relation de corrélation entre la puissance émise et la distance capteur-obstacle, on est capable de fournir une mesure chiffrée de distance en fonction de la réponse obtenue.

Le tableau 1 ci-après fournit à titre illustratif les mesures effectuées sur un mur crépi blanc comme obstacle, avec les valeurs de résistance suivantes : R1 = 15 Ω, R2 = 35 Ω, R3 = 68 Ω, R4 = 150 Ω

**Tableau 1**

| Distance (cm) | Indice de puissance |
|---|---|
| 30 | 1 |
| 75 | 2 |
| 90 | 3 |
| 108 | 4 |
| 120 | 5 |
| 140 | 6 |
| 165 | 7 |
| 195 | 8 |
| 210 | 9 |
| 225 | 10 |
| 255 | 11 |
| 270 | 12 |
| 300 | 13 |
| 315 | 14 |
| 360 | 15 |
| 450 | 16 |

Le circuit électronique permettant de gérer la communication et la transmission des mesures des huit capteurs est représenté sur la figure 3.

Le circuit représenté sur cette figure 3 permet de transmettre huit mesures correspondant respectivement aux huit capteurs donnant chacun une information sur 8 bits. A cet effet, on utilise un codage mixant à la fois la mesure du capteur sur 4 bits (les seize valeurs de puissance sont codées en binaire sur 4 bits) et l'identification du récepteur associé, laquelle est également codée sur 4 bits).

Le mode de transmission de la mesure doit se faire de façon parallèle, car on utilise ici un bus 8 bits sur le processeur externe 9. Comme il est impossible de remonter la quantité d'informations correspondant aux 8 mesures en une seule fois par le bus 8 bits, on démultiplexe les mesures on les faisant remonter une par une. Ainsi, pour une séquence d'acquisition donnant 8 mesures distinctes, il faut 8 lectures par le processeur externe 9 pour acquérir ces informations.

L'interface entre le microcontrôleur 8 (U1) et le processeur externe 9 (U13) se fait par un registre 11 (U3) de type bascule à sortie collecteur ouvert, le chargement (ou écriture des mesures) se fait par le microcontrôleur 8 et la saisie (ou lecture des mesures) se fait par le processeur externe 9 qui calcule ensuite la distance correspondante avec un obstacle.

Le microcontrôleur 8 est ensuite informé que le processeur externe 9 a effectué une lecture, en lisant la valeur de la bascule (Set/Reset) sur le registre 10 (U4). La bascule est réinitialisée lorsque le microcontrôleur enregistre une nouvelle valeur de mesure dans le registre. Lorsque une transmission vers le processeur a commencé, la phase de mesures est stoppée. Lorsque le processeur externe est occupé, le microcontrôleur retourne en mesure de distance.

## Revendications

1. Procédé de détection et de mesure de distance et entre un premier objet (1) et un deuxième objet (2) ; ledit procédé étant tel qu'il comprend les étapes suivantes :
a) l'étape d'émettre un rayonnement infrarouge (3) à partir d'un émetteur (4) fixé sur ledit premier objet (1) et alimenté par un signal électrique d'émission, et
b) l'étape de détecter le retour dudit rayonnement infrarouge sur un récepteur (5), après que ledit rayonnement infrarouge ait été réfléchi par ledit deuxième objet (2) ;
ledit récepteur (5) étant fixé sur ledit premier objet (1) à proximité dudit émetteur (4) et produisant un signal électrique de réception ;
ledit procédé étant **caractérisé en ce qu'**il comprend en outre les étapes suivantes :
c) l'étape de faire varier graduellement la puissance du rayonnement infrarouge émis par ledit émetteur (4), en contrôlant ledit signal électrique d'émission, jusqu'à ce que la puissance du rayonnement infrarouge émis atteigne une puissance de détection (PS) telle que, pour cette puissance de détection (PS), le rayonnement infrarouge soit détecté par ledit récepteur (5) après réflexion par ledit deuxième objet,
d) l'étape de calculer la distance (D) entre ledit premier objet (1) et ledit deuxième objet (2) à partir de la valeur de ladite puissance de détection (PS), en établissant une corrélation, notamment par étalonnage, entre ladite distance (D) et ladite puissance de détection.

2. Procédé selon la revendication 1, ledit procédé étant tel que ledit rayonnement infrarouge est émis selon un mode spécifique comportant une signature caractéristique dudit émetteur (4).

3. Procédé selon la revendication 2, ledit procédé étant tel que ladite signature est **caractérisée par** le mode spécifique d'émission dudit émetteur (4), notamment par un mode d'émission puisé présentant une fréquence de pulsation donnée.

4. Procédé selon l'une quelconque des revendications 2 ou 3, ledit procédé étant tel que ladite signature est une signature numérique, notamment une signature numérique associée à un mode démission pulsé.

5. Procédé selon la revendication 4, ledit signal électrique d'émission étant un signal en créneau, ledit procédé étant tel que la signature numérique dudit rayonnement infrarouge se présente sous la forme d'un signal logique composé de (« 1 ») ou de (« 0 ») selon que l'émetteur est alimenté ou non par ledit signal en créneau.

6. Procédé selon l'une quelconque des revendications 2 à 5, ledit procédé étant tel que pour déterminer si un rayonnement infrarouge réfléchi, reçu par un récepteur (5) d'un objet (1) déterminé, a pour origine un émetteur (4) situé sur ledit objet déterminé, on vérifie ladite signature, de sorte qu'il est possible de discriminer entre le rayonnement infrarouge réfléchi provenant de l'émetteur (4) dudit objet (1) déterminé et les rayonnements infrarouges provenant, directement ou indirectement, d'autres objets.

7. Procédé selon la revendication 6, ledit procédé étant tel que, pour vérifier ladite signature numérique, on compare le signal électrique d'alimentation de l'émetteur (4) dudit objet (1) déterminé au signal électrique fourni par le récepteur (5) du même dit objet (1) déterminé.

8. Procédé selon l'une quelconque des revendications 1 à 7, ledit procédé étant en outre plus particulièrement destiné à déterminer la position d'un ou plusieurs deuxièmes objets (2) par rapport à un référentiel lié audit premier objet (1), ledit procédé comprenant en outre l'étape suivante :
- l'étape d'émettre, à partir dudit premier objet (1), des rayonnements infrarouges dans plusieurs directions réparties de manière appropriée autour dudit premier objet, de préférence dans au moins quatre directions, de préférence encore dans au moins huit directions ;
lesdits rayonnements infrarouges, associés à chaque direction, étant émis dans des cônes dont l'angle au sommet est compris entre 5 et 90°,
de sorte que lesdits deuxièmes objets (2) situés dans l'environnement dudit premier objet (1) sont détectés et que leurs positions par rapport à un référentiel lié au premier objet (1) peuvent être calculées.

9. Dispositif de détection et de mesure de distance entre un premier objet (1) et un deuxième objet (2), ledit dispositif comprenant :
- un émetteur (4) de rayonnement infrarouge fixe sur ledit premier objet (1) et alimenté par un signal électrique d'émission,
- un récepteur (5) détectant le retour dudit rayonnement infrarouge, après que ledit rayonnement infrarouge ait été réfléchi par ledit deuxième objet (2) ;
ledit récepteur (5) étant fixé sur ledit premier objet (1) à proximité dudit émetteur (4) et produisant un signal électrique de réception ;
ledit dispositif étant **caractérisé en ce qu'**il comprend :
1) des moyens de contrôle (8) dudit signal électrique permettant de faire varier graduellement la puissance du rayonnement infrarouge émis par ledit émetteur (4), en contrôlant ledit signal électrique d'émission, jusqu'à ce que la puissance du rayonnement infrarouge émis atteigne une puissance de détection (PS) telle que, pour cette puissance de détection (PS), le rayonnement infrarouge est détecté par ledit récepteur (5) après réflexion par ledit deuxième objet (2),
2) des moyens de calcul (9) de la distance (D) entre ledit premier objet (1) et ledit deuxième objet (2) à partir de la valeur de ladite puissance de détection (PS), en utilisant des corrélations, préalablement établies notamment par étalonnage, entre ladite distance (D) et ladite puissance de détection (PS).

10. Dispositif selon la revendication 9, ledit dispositif étant tel que :
- ledit émetteur (4) comprend une diode électroluminescente émettant spécifiquement à une longueur d'onde infrarouge donnée,
- ledit récepteur (5) comprend un phototransistor ou photodiode détectant spécifiquement ladite longueur d'onde infrarouge donnée.

11. Dispositif selon l'une quelconque des revendications 9 ou 10, lesdits moyens de contrôle (8) dudit signal électrique permettant de faire varier graduellement la puissance du rayonnement infrarouge émis par ledit émetteur (4), comprenant un premier processeur (8) contrôlant ledit signal électrique d'émission de telle sorte que ledit rayonnement infrarouge soit émis selon un mode spécifique comportant une signature.

12. Dispositif selon la revendication 11, ledit premier processeur (8) étant programmé de telle sorte que le mode spécifique d'émission dudit émetteur (4) soit un mode d'émission pulsé présentant une fréquence de pulsation donnée caractérisant ladite signature.

13. Dispositif selon l'une quelconque des revendications 11 ou 12, ledit premier processeur (8) contrôlant ledit signal électrique d'émission étant programmé de telle sorte que le mode spécifique d'émission dudit émetteur (4) soit un mode d'émission pulsé comportant une signature numérique.

14. Dispositif selon la revendication 13, ledit premier processeur (8) étant programmé de telle sorte que ledit signal électrique d'émission soit un signal en créneau et que ladite signature numérique dudit rayonnement infrarouge se présente sous la forme d'un signal logique composé de (« 1 ») ou de (« 0 ») selon que l'émetteur est alimenté ou non par ledit signal en créneau.

15. Dispositif selon l'une quelconque des revendications 11 à 14, ledit dispositif étant tel que pour déterminer si un rayonnement infrarouge réfléchi, reçu par un récepteur (5) d'un objet (1) déterminé, a pour origine un émetteur (4) situé sur ledit objet déterminé, ledit premier processeur (8) comporte des moyens de vérifications de ladite signature, de sorte qu'il est possible de discriminer entre le rayonnement infrarouge réfléchi provenant de l'émetteur (4) dudit objet (1) déterminé et les rayonnements infrarouges provenant, directement ou indirectement, d'autres objets.

16. Dispositif selon la revendication 15, lesdits moyens de vérification de ladite signature comportant des moyens de comparaison du signal électrique d'alimentation de l'émetteur (4) dudit objet (1) déterminé au signal électrique fourni par le récepteur (5) du même dit objet (1) déterminé.

17. Dispositif selon l'une quelconque des revendications 11 à 16, ledit dispositif étant tel que :
- ledit premier processeur (8) contrôle par un signal numérique sur n bits, via des transistors à effet de champ, n résistances de valeurs différentes montées sur le circuit d'alimentation électrique dudit émetteur (4), de sorte que la puissance de rayonnement infrarouge émise par ledit émetteur (4), notamment par une diode électroluminescente, peut prendre 2 valeurs croissantes,
- ledit premier processeur (8), relié au récepteur (5), vérifie que le signal électrique fourni par le récepteur (5) comporte la même signature, notamment ladite signature numérique,
- ledit premier processeur (8) transmet à un deuxième processeur (9) un signal formé sur n bits indiquant parmi les 2 valeurs possibles de ladite puissance de détection (PS) celle qui a été constatée,
- ledit deuxième processeur (9) calcule la distance entre le premier objet (1) et le second objet (2) par corrélation à partir d'un étalonnage des 2 valeurs de distance possible par rapport aux 2 valeurs de puissance de détection.

18. Dispositif selon la revendication 17, ledit dispositif étant tel que ledit émetteur (4), notamment une diode émettrice, est capable d'émettre une puissance de rayonnement maximal donnée PI et ledit récepteur (5), notamment une diode réceptrice, est capable de détecter une puissance de rayonnement minimal donnée P2 ; les valeurs PI et P2 étant telles qu'il est possible de mesurer des distances comprises entre 0,5 m et 5 m, et de préférence encore entre 0,1 m et 10 m.

19. Dispositif selon l'une quelconque des revendications 17 ou 18, le nombre de paliers de puissance de détection (PS) et le nombre n de résistances de valeurs différentes Ri avec i = 1 à n étant tel que la précision de mesure, consistant en l'écart entre lesdites 2 distances possibles consécutives soit d'au moins 10 cm, de préférence d'au moins 1 cm.

20. Dispositif selon l'une quelconque des revendications 9 à 17, ledit dispositif étant en outre plus particulièrement destiné à déterminer la position d'un ou plusieurs deuxièmes objets (2) par rapport à un référentiel lié audit premier objet (1) ; ledit dispositif comprenant en outre :
- une pluralité d'émetteurs (4) et de récepteurs (5) émettant et recevant des rayonnements infrarouges dans plusieurs directions réparties de manière appropriée autour dudit premier objet (1), de préférence dans au moins quatre directions, de préférence encore dans au moins huit directions ;
lesdits rayonnements infrarouges, associés à chaque direction, étant émis dans des cônes dont l'angle au sommet est compris entre 5 et 90°;
de sorte que lesdits deuxièmes objet (2) situés dans l'environnement dudit premier objet (1) sont détectés et que leurs positions par rapport à un référentiel lié au premier objet (1) peuvent être calculées.

21. Dispositif selon l'une des revendications 9 à 20 **caractérisé en ce qu'**il comprend au moins deux capteurs infrarouge.

22. Robot mobile détectant et évitant des obstacles ; ledit robot mobile comportant des moyens de déplacement contrôlés par un organe de commande comprenant un dispositif selon l'une quelconque des revendications 9 à 21 ;
de sorte que :
- si un ou plusieurs obstacles se trouvent dans l'environnement dudit robot mobile,
- si ledit robot mobile se déplace dans une direction coïncidant avec celle dans laquelle se trouve ledit obstacle,
- si la distance mesurée entre ledit robot mobile et ledit obstacle est inférieure à une valeur déterminée, notamment en fonction de la vitesse de déplacement dudit robot mobile,
ledit dispositif programme un changement de trajectoire, en tenant compte des autres obstacles situés dans l'environnement.

23. Robot mobile selon la revendication 22 qui comporte :
- une ligne commune d'alimentation de plusieurs desdits émetteurs infrarouges,
- plusieurs branches insérées dans ladite ligne commune d'alimentation, chaque branche présentant une résistance (R1 à R4) et comportant un interrupteur (Q1 à Q4), lesdites branches étant connectées en parallèle,
- des moyens (8) aptes à délivrer aux interrupteurs (Q1 à Q4) un signal numérique de commande d'ouverture ou fermeture, de façon à faire varier graduellement l'intensité délivrée aux émetteurs.

24. Application du procédé et du dispositif selon l'une quelconque des revendications 1 à 21 à la détection et à l'évitement d'un obstacle par un mobile, notamment un robot :
- ledit mobile correspondant audit premier objet (1),
- ledit obstacle correspondant audit deuxième objet (2),
de sorte que :
- si un ou plusieurs obstacles se trouvent dans l'environnement dudit mobile,
- si ledit mobile se déplace dans une direction coïncidant avec celle dans laquelle se trouve ledit obstacle,
- si la distance mesurée entre ledit mobile et ledit obstacle est inférieure à une valeur déterminée, notamment en fonction de la vitesse de déplacement dudit mobile,
ledit mobile programme un changement de trajectoire, en tenant compte des autres obstacles situés dans l'environnement.

## Patentansprüche

1. Verfahren zur Detektion und Messung eines Abstandes zwischen einem ersten Objekt (1) und einem zweiten Objekt (2), wobei das Verfahren die folgenden Schritte umfasst:
a) den Schritt des Aussendens von Infrarotstrahlung (3) durch einen Sender (4), der am ersten Objekt (1) angebracht ist und dem ein elektrisches Sendesignal zugeführt wird, und
b) den Schritt der Detektion der Rückkehr der Infrarotstrahlung zu einen Empfänger (5), nachdem die Infrarotstrahlung vom zweiten Objekt (2) reflektiert wurde, wobei der Empfänger (5) am ersten Objekt (1) nahe dem Sender (4) angebracht ist und ein elektrisches Empfangssignal erzeugt,
**dadurch gekennzeichnet, dass** das Verfahren zusätzlich die folgenden Schritte umfasst:
c) den Schritt des stetigen Veränderns der Leistung der vom Sender (4) ausgesendeten Infrarotstrahlung durch Steuern des elektrischen Sendesignals, bis die Leistung der gesendeten Infrarotstrahlung eine derartige Detektionsleistung (PS) erreicht, dass bei dieser Detektionsleistung (PS) die Infrarotstrahlung nach Reflexion am zweiten Objekt durch den Empfänger (5) detektiert wird,
d) den Schritt des Berechnens des Abstandes (D) zwischen dem ersten Objekt (1) und dem zweiten Objekt (2) anhand des Wertes der Detektionsleistung (PS), indem insbesondere durch Eichung eine Korrelation zwischen dem Abstand (D) und der Detektionsleistung hergestellt wird.

2. Verfahren nach Anspruch 1, bei dem die Infrarotstrahlung in einem spezifischen Modus mit einer für den Sender (4) charakteristischen Kennung ausgesendet wird.

3. Verfahren nach Anspruch 2, bei dem die Kennung durch den spezifischen Sendemodus des Senders (4), insbesondere durch einen gepulsten Sendemodus mit einer vorgegebenen Pulsfrequenz, **gekennzeichnet** ist.

4. Verfahren nach einem der Ansprüche 2 oder 3, bei dem die Kennung eine digitale Kennung, insbesondere eine einem gepulsten Sendemodus zugeordnete digitale Kennung, ist.

5. Verfahren nach Anspruch 4, bei dem das elektrische Sendesignal ein Rechtecksignal ist, wobei das Verfahren dergestalt ist, dass die digitale Kennung der Infrarotstrahlung in Form eines aus Einsen ("1") und Nullen ("0") bestehenden Logiksignals vorliegt, je nach dem, ob dem Sender das Rechtecksignal zugeführt wird oder nicht.

6. Verfahren nach einem der Ansprüche 2 bis 5, bei dem man zur Bestimmung, ob reflektierte Infrarotstrahlung, die von einem Empfänger (5) eines bestimmten Objektes (1) empfangen wird, von einem Sender (4) stammt, der sich auf dem bestimmten Objekt befindet, die Kennung überprüft, derart, dass zwischen der reflektierten Infrarotstrahlung, die vom Sender (4) des bestimmten Objektes (1) stammt, und den Infrarotstrahlungen, die direkt oder indirekt von anderen Objekten stammen, unterschieden werden kann.

7. Verfahren nach Anspruch 6, bei dem man zur Überprüfung der digitalen Kennung das elektrische Speisesignal des Senders (4) des bestimmten Objektes (1) mit dem elektrischen Signal vergleicht, das vom Empfänger (5) desselben bestimmten Objektes (1) geliefert wird.

8. Verfahren nach einem der Ansprüche 1 bis 7, wobei das Verfahren ferner insbesondere dazu dient, die Lage eines oder mehrerer zweiter Objekte (2) gegenüber einem Bezugssystem zu bestimmen, das mit dem ersten Objekt (1) verbunden ist, wobei das Verfahren zusätzlich den folgenden Schritt umfasst:
- den Schritt des Aussendens von Infrarotstrahlungen, ausgehend vom ersten Objekt (1), in mehrere Richtungen, die entsprechend um das erste Objekt herum verteilt sind, vorzugsweise in mindestens vier Richtungen und sogar in mindestens acht Richtungen,
wobei die jeder Richtung zugeordneten Infrarotstrahlungen als Kegel ausgesendet werden, deren Kegelwinkel im Bereich von 5 bis 90° liegt,
so dass die zweiten Objekte (2), die sich in der Umgebung des ersten Objektes (1) befinden, detektiert werden und ihre Lage gegenüber einem Bezugssystem, das mit dem ersten Objekt (1) verbunden ist, berechnet werden kann.

9. Vorrichtung zur Detektion und Messung des Abstandes zwischen einem ersten Objekt (1) und einem zweiten Objekt (2), wobei die Vorrichtung folgende Merkmale umfasst:
- einen Sender (4) für Infrarotstrahlung, der an dem ersten Objekt (1) angebracht ist und dem ein elektrisches Sendesignal zugeführt wird,
- einen Empfänger (5), der die Rückkehr der Infrarotstrahlung detektiert, nachdem die Infrarotstrahlung vom zweiten Objekt (2) reflektiert wurde,
wobei der Empfänger (5) am ersten Objekt (1) nahe dem Sender (4) angebracht ist und ein elektrisches Empfangssignal erzeugt,
**dadurch gekennzeichnet, dass** die Vorrichtung folgende weiteren Merkmale umfasst:
1) Steuermittel (8) für das elektrische Signal, mit denen die Leistung der Infrarotstrahlung, die vom Sender (4) ausgesendet wird, stetig verändert werden kann, indem das elektrische Sendesignal gesteuert wird, bis die Leistung der ausgesendeten Infrarotstrahlung eine derartige Detektionsleistung (PS) erreicht, dass bei dieser Detektionsleistung (PS) die Infrarotstrahlung nach Reflexion am zweiten Objekt (2) durch den Empfänger (5) detektiert wird,
2) Mittel (9) zum Berechnen des Abstandes (D) zwischen dem ersten Objekt (1) und dem zweiten Objekt (2) anhand des Wertes der Detektionsleistung (PS), wobei Korrelationen zwischen dem Abstand (D) und der Detektionsleistung (PS) verwendet werden, die zuvor, insbesondere durch Eichung, ermittelt wurden.

10. Vorrichtung nach Anspruch 9, bei der:
- der Sender (4) eine Elektrolumineszenzdiode umfasst, die insbesondere bei einer bestimmten Infrarotwellenlänge sendet,
- der Empfänger (5) einen Phototransistor oder eine Photodiode umfasst, der/die insbesondere die bestimmte Infrarotwellenlänge detektiert.

11. Vorrichtung nach einem der Ansprüche 9 oder 10, bei der die Steuermittel (8) für das elektrische Signal, mit denen die Leistung der vom Sender (4) ausgesendeten Infrarotstrahlung stetig verändert werden kann, einen ersten Prozessor (8) umfassen, der das Sendesignal so steuert, dass die Infrarotstrahlung in einem spezifischen Modus mit einer Kennung ausgesendet wird.

12. Vorrichtung nach Anspruch 11, bei der der erste Prozessor (8) so programmiert ist, dass der spezifische Sendemodus des Senders (4) ein gepulster Sendemodus ist, der eine vorgegebene Pulsfrequenz aufweist, welche die Kennung charakterisiert.

13. Vorrichtung nach einem der Ansprüche 11 oder 12, bei der der erste Prozessor (8), der das elektrische Sendesignal steuert, so programmiert ist, dass der spezifische Sendemodus des Senders (4) ein gepulster Sendemodus mit einer digitalen Kennung ist.

14. Vorrichtung nach Anspruch 13, bei der der erste Prozessor (8) so programmiert ist, dass das elektrische Sendesignal ein Rechtecksignal ist und die digitale Kennung der Infrarotstrahlung in Form eines aus Einsen ("1") und Nullen ("0") bestehenden Logiksignals vorliegt, je nach dem, ob dem Sender das Rechtecksignal zugeführt wird oder nicht.

15. Vorrichtung nach einem der Ansprüche 11 bis 14, bei der zur Feststellung, ob eine reflektierte Infrarotstrahlung, die von einem Empfänger (5) eines bestimmten Objektes (1) empfangen wurde, von einem Sender (4) stammt, der sich auf dem bestimmten Objekt befindet, der erste Prozessor (8) Mittel zur Überprüfung der Kennung umfasst, derart, dass es möglich ist, zwischen der reflektierten Infrarotstrahlung, die vom Sender (4) des bestimmten Objektes (1) stammt, und den Infrarotstrahlungen, die direkt oder indirekt von anderen Objekten stammen, zu unterscheiden.

16. Vorrichtung nach Anspruch 15, bei der die Mittel zur Überprüfung der Kennung Mittel aufweisen zum Vergleichen des elektrischen Speisesignals des Senders (4) des bestimmten Objektes (1) mit dem elektrischen Signal, das vom Empfänger (5) desselben bestimmten Objektes (1) geliefert wird.

17. Vorrichtung nach einem der Ansprüche 11 bis 16, bei der:
- der erste Prozessor (8) durch ein digitales Signal mit n Bits über Feldeffekttransistoren n Widerstände mit unterschiedlichen Werten steuert, die auf der elektrischen Versorgungsschaltung des Senders (4) montiert sind, so dass die Leistung der vom Sender (4), insbesondere von einer Elektrolumineszenzdiode, ausgesendete Infrarotstrahlung zwei ansteigende Werte annehmen kann,
- der erste Prozessor (8), der mit dem Empfänger (5) verbunden ist, überprüft, ob das elektrische Signal, das vom Empfänger (5) geliefert wird, dieselbe Kennung, insbesondere die digitale Kennung, aufweist,
- der erste Prozessor (8) an einen zweiten Prozessor (9) ein Signal überträgt, das aus n Bits gebildet ist, die von den zwei möglichen Werten für die Detektionsleistung (PS) diejenige angeben, die ermittelt wurde,
- der zweite Prozessor (9) den Abstand zwischen dem ersten Objekt (1) und dem zweiten Objekt (2) durch Korrelation aufgrund einer Eichung der zwei möglichen Abstandswerten gegenüber den zwei Werten für die Detektionsleistung berechnet.

18. Vorrichtung nach Anspruch 17, bei der der Sender (4), insbesondere eine Sendediode, in der Lage ist, eine vorgegebene maximale Strahlungsleistung PI auszusenden, und der Sender (5), insbesondere eine Empfangsdiode, in der Lage ist, eine vorgegebene minimale Strahlungsleistung P2 zu detektieren, wobei die Werte PI und P2 es ermöglichen, Abstände zu messen, die im Bereich von 0,5 m bis 5 m und noch bevorzugter im Bereich von 0,1 m bis 10 m liegen.

19. Vorrichtung nach einem der Ansprüche 17 oder 18, wobei die Anzahl der Stufen der Detektionsleistung (PS) und die Anzahl n von Widerständen mit unterschiedlichen Werten Ri mit i= 1 bis n dergestalt ist, dass die Messgenauigkeit, die in der Abweichung zwischen den zwei möglichen aufeinander folgenden Abständen besteht, mindestens 10 cm, vorzugsweise mindestens 1 cm, beträgt.

20. Vorrichtung nach einem der Ansprüche 9 bis 17, die ferner insbesondere dazu dient, die Lage eines oder mehrerer zweiter Objekte (2) gegenüber einem Bezugssystem, das mit dem ersten Objekt (1) verbunden ist, zu bestimmen, wobei die Vorrichtung zusätzlich folgende Merkmale umfasst:
- mehrere Sender (4) und Empfänger (5), die Infrarotstrahlungen in mehreren Richtungen, die entsprechend um das erste Objekt (1) herum verteilt sind, vorzugsweise in mindestens vier Richtungen und sogar in mindestens acht Richtungen, aussenden und empfangen,
wobei die jeder Richtung zugeordneten Infrarotstrahlungen als Kegel ausgesendet werden, deren Kegelwinkel im Bereich von 5 bis 90° liegt,
so dass die zweiten Objekte (2), die in der Umgebung des ersten Objektes (1) liegen, detektiert werden und ihre Lage gegenüber einem Bezugssystem, das mit dem ersten Objekt (1) verbunden ist, berechnet werden kann.

21. Vorrichtung nach einem der Ansprüche 9 bis 20, **dadurch gekennzeichnet, dass** sie mindestens zwei Infrarotsensoren umfasst.

22. Mobiler Roboter, der Hindernisse detektiert und ihnen ausweicht, wobei der mobile Roboter Mittel zur Fortbewegung umfasst, die durch ein Steuerorgan gesteuert werden, das eine Vorrichtung nach einem der Ansprüche 9 bis 21 umfasst, derart, dass:
- wenn sich ein oder mehrere Hindernisse in der Umgebung des mobilen Roboters befinden,
- wenn der mobile Roboter sich in einer Richtung fortbewegt, die mit der Richtung übereinstimmt, in der sich das Hindernis befindet,
- wenn der zwischen dem mobilen Roboter und dem Hindernis gemessene Abstand, insbesondere abhängig von der Fortbewegungsgeschwindigkeit des mobilen Roboters, kleiner als ein vorbestimmter Wert ist,
die Vorrichtung unter Berücksichtigung der anderen Hindernisse, die sich in der Umgebung befmden, eine Bahnänderung programmiert.

23. Mobiler Roboter nach Anspruch 22, der folgende Merkmale umfasst:
- eine gemeinsame Versorgungsleitung für mehrere der Infrarotsensoren,
- mehrere Zweige, die in die gemeinsame Versorgungsleitung eingesetzt sind, wobei jeder Zweig einen Widerstand (R1 bis R4) und einen Umschalter (Q1 bis Q4) aufweist, und die Zweige parallel geschaltet sind,
- Mittel (8), die dazu geeignet sind, den Umschaltern (Q1 bis Q4) ein digitales Befehlssignal zum Öffnen oder Schließen zu liefern, derart, dass die den Sendern zugeführte Intensität stetig verändert wird.

24. Anwendung des Verfahrens und der Vorrichtung nach einem der Ansprüche 1 bis 21 zur Detektion und zur Vermeidung eines Hindernisses durch ein mobiles Gerät, insbesondere einen Roboter,
- wobei das mobile Gerät dem ersten Objekt (1) entspricht,
- das Hindernis dem zweiten Objekt (2) entspricht,
derart, dass:
- wenn sich ein oder mehrere Hindernisse in der Umgebung des mobilen Gerätes befinden,
- wenn das mobile Gerät sich in einer Richtung fortbewegt, die mit der Richtung übereinstimmt, in der sich das Hindernis befindet,
- wenn der zwischen dem Mobil und dem Hindernis gemessene Abstand, insbesondere abhängig von der Fortbewegungsgeschwindigkeit des mobilen Gerätes, kleiner als ein vorbestimmter Wert ist,
das mobile Gerät unter Berücksichtigung der anderen Hindernisse, die sich in der Umgebung befinden, eine Bahnänderung programmiert.

## Claims

1. Method for the detection and measurement of the distance between a first object (1) and a second object (2), the said method being such that it includes the following steps:
a) The step of emitting an infrared radiation (3) from an emitter affixed to the said first object (1) and fed by an electric emission signal, and
b) the step of detecting the return of the said infrared radiation to a receiver (5), after the said infrared radiation has been reflected by the said second object (2); the said receiver (5) being affixed to the said first object (1) close to the said emitter (4) and producing an electrical signal of reception;
the said process being **characterized in that** it furthermore includes the following steps:
c) the step of gradually varying the infrared radiation power emitted by the said emitter (4) by controlling the said electrical emission signal, until the power of the infrared radiation emitted attains a detection power (PS) such that, for this detection power (PS) the infrared radiation is detected by the said receiver (5) after reflection by the second object,
d) the step of calculating the distance (D) between the said first object (1) and the said second object (2) starting out from the value of the said detection power (PS), by establishing a correlation, particularly by calibration, between the said distance (D) and the said detection power.

2. Method according to claim 1, the said method being such that the said infrared radiation is emitted in a specific mode containing a signature characteristic of the said emitter (4).

3. Method according to claim 2, the said method being such that the said signature is **characterized by** the specific mode of emission of the said emitter (4), particularly by a mode of pulsed emission having a given pulsation frequency.

4. Method according to either one of claims 2 or 3, the said method being such that the said signature is a digital signature, particularly a digital signature associated with a pulsed mode of emission.

5. Method according to claim 4, the said electrical emission signal being a square-wave signal, the said method being such that the digital signature of the said infrared radiation appears in the form of a logical signal composed of ("1") or of ("0") according to whether the emitter is or is not fed by the said square-wave signal.

6. Method according to any one of claims 2 to 5, the said method being such that to determine whether a reflected infrared radiation received by a receiver (5) from a particular object (1) originates from an emitter (4) situate on the said determinate object, the said signature is verified such that it is possible to discriminate between the reflected infrared radiation coming from the emitter (4) on the said determinate object (1) and the infrared rays coming directly or indirectly from other objects.

7. Method according to claim 6, the said method being such that, to verify the said digital signature, the electrical signal powering the emitter (4) of the said determinate object (1) is compared with the electrical signal provided by the receiver (5) on the same said determinate object (1).

8. Method according to any one of claims 1 to 7, the said method being furthermore more particularly designed to determine the position of one or more second objects (2) in relation to a frame of reference bound to the said first object (1), the said method furthermore containing the following step:
- the step of emitting from the said first object (1) infrared rays in several directions appropriately distributed about the said first object, preferably in at least four directions, preferably also in at least three directions,
the said infrared rays associated with each direction being emitted in cones whose apex angle is between 5 and 90°,
such that the said second objects (2) situated in the vicinity of the said first object (1) are detected and that their positions in relation to a frame of reference tied to the first object (1) can be calculated.

9. Method for detection and measurement of distance between a first object (1) and a second object (2), the said device containing:
- an emitter (4) of infrared radiation affixed to the said first object (1) and supplied with an electrical emission signal,
- a receiver (5) detecting the return of the said infrared radiation after the said infrared radiation has been reflected by the said second object (2);
the said receiver (5) being affixed to the said first object (1) close to the said emitter (4) and producing an electrical signal of reception;
the said device being **characterized in that** it includes:
1/ means of control (8) of the said electrical signal enabling the gradual variation of the power of the infrared radiation emitted by the said emitter (4), by controlling the said electrical emission signal until the power of the infrared radiation emitted attains a power of detection (PS) such that, for this power of detection (PS) the infrared radiation is detected by the said receiver (5) after reflection by the said second object (2),
2/ means for calculation (9) of the distance (D) between the said first object (1) and the said second object (2), setting out from the value of the said detection power (PS), utilizing correlations previously established particularly by calibration, between the said distance (D) and the said detection power (PS).

10. Device according to claim 9, the said device being such that:
- the said emitter (4) includes an electroluminescent diode emitting specifically at a given infrared wavelength,
- the said receiver (5) includes a phototransistor or photodiode detecting specifically the said given infrared wavelength.

11. Device according to either one of claims 9 or 10, the said means of control (8) of the said electrical signal permitting the gradual variation of the power of the infrared radiation emitted by the said emitter (4), containing a first processor (8) controlling the said electrical emission signal such that the said infrared radiation is emitted in a specific mode containing a signature.

12. Device according to claim 11, the said first processor (8) being programmed such that the specific mode of emission of the said emitter (4) is a pulsed mode of emission having a given pulsation frequency characterizing the said signature.

13. Device according to either one of claims 11 or 12, the said first processor (8) controlling the said electrical emission signal being programmed such that the specific mode of emission of said emitter (4) is a pulsed mode of emission containing a digital signature.

14. Device according to claim 13, the said first processor (8) being programmed such that the said electrical emission signal is a square-wave signal and that the said digital signature of the said infrared radiation appears in the form of a logical signal composed of ("1") or ("0") according to whether the emitter is or is not fed the said square-wave signal.

15. Device according to any one of claims 11 to 14, the said device being such that, to determine whether a reflected infrared ray received by a receiver (5) from a particular object (1) originates from an emitter (4) situated on the said determinate object, the said first processor (8) contains means of verification of the said signature, so that it is possible to discriminate between the reflected infrared radiation coming from the emitter (4) of the said determinate object (1) and the infrared rays originating directly or indirectly from other objects.

16. Device according to claim 15, the said means of verification of the said signature containing means for comparing the electric signal supply signal of the emitter (4) of the said determinate object (1) with the electric signal given by the receiver (5) from the same said determinate object (1).

17. Device according to anyone of claims 11 to 16, the said device being such that:
- by a digital signal on n bits, the said first processor (8) controls through field effect transistors n resistances of different values mounted on the electric power supply of the said emitter (4) such that the power of the infrared radiation emitted by the said emitter (4), particularly by an electroluminescent diode, can assume 2ⁿ increasing values,
- the said first processor (8), connected to the receiver (5), verifies that the electrical signal given by the receiver (5) contains the same signature, particularly the said digital signal,
- the said first processor (8) transmits to a second processor (9) a signal formed on *n* bits indicating, among the 2ⁿ possible values of the said detection power (PS), the one which it has found,
- the said second processor (9) computes the distance between the first object (1) and the second object (2) by correlation from a calibration of the 2ⁿ possible values of distance in relation to the 2ⁿ detection power values.

18. Device according to claim 17, the said device being such that the said emitter (4), particularly an emitting diode, is capable of emitting a given maximum radiation power P1 and the said receiver (5), particularly a receiving diode, is capable of detecting a given minimum radiation power P2, the values of P1 being such that it is possible to measure distances between 0.5 m and 5 m, and more preferably between 0.1 m and 10 m.

19. Device according to either of claims 17 or 18, the number of detection power steps and the number *n* of resistances of different values Ri with I = 1 being such that the precision of measurement, consisting in the separation between the said 2ⁿ possible consecutive distances it at least 10 cm, preferably at least 1 cm.

20. Device according to any one of claims 9 to 17, the said device being furthermore more particularly designed to determine the position of one or more second objects (2) with respect to a frame of reference bound to the said first object (1), the said device furthermore including:
- a plurality of emitters (4) and receivers (5) emitting and receiving infrared rays in a plurality of directions distributed in an appropriate manner around the said first object (1), preferably in at least four directions, and more preferably in at least eight directions,
the said infrared rays associated with each direction being emitted in cones whose apex angle is between 5 and 90°,
such that the said second objects (2) situated in the vicinity of the said first object (1) are detected and their positions with respect to a frame of reference connected with the first object (1) can be calculated.

21. Device according to claims 9 **characterised in that** it comprises at least two infrared receivers.

22. Mobile robot detecting and avoiding obstacles, the said mobile robot containing means of displacement controlled by a control means including a device according to any one of claims 9 to 21,
such that:
• if one or more obstacles are in the vicinity of the said mobile robot,
• if the said mobile robot moves in a direction coinciding with that in which the said obstacle is situated,
• if the distance measured between the said mobile robot and the said obstacle is below a particular value, particularly in relation to the speed of movement of the said mobile robot,
the said device programs a change of path while taking into account other obstacles situated in the vicinity.

23. Mobile robot according to claim 22 which contains:
- a common line for supplying a plurality of said infrared emitters,
- a plurality of branches inserted into the said common supply line, each branch having a resistor (R1 to R4) and containing a switch (Q1 to Q4), the said branches being connected in parallel,
- means (8) adapted to deliver to the switches (Q1 to Q4) an opening or closing digital command, such as to cause the current delivered to the emitters to vary.

24. Application of the method and of the device according to any one of claims 1 to 21 to the detection and to the avoidance of an obstacle by a vehicle, particularly a robot:
- the said vehicle corresponding to the said first object (1),
- the said obstacle corresponding to the said second object (2),
such that:
- if one or more obstacles are in the vicinity of the said vehicle,
- if the said vehicle moves in a direction coinciding with the one in which the said obstacle is situated,
- if the distance measured between the said vehicle and the said obstacle is less than a determinate value, particularly according to the speed of movement of the said vehicle,
the said vehicle programs a change of course, taking into account other obstacles situated in the vicinity.
